(19) Europäisches Patentamt / European Patent Office / Office européen des brevets

(11) **EP 2 423 896 A1**

(12) **EUROPEAN PATENT APPLICATION**
published in accordance with Art. 153(4) EPC

(43) Date of publication:
**29.02.2012 Bulletin 2012/09**

(51) Int Cl.:
*G08B 17/12* (2006.01)   *G01J 1/42* (2006.01)

(21) Application number: **10767028.3**

(22) Date of filing: **19.04.2010**

(86) International application number:
**PCT/JP2010/056904**

(87) International publication number:
**WO 2010/122971 (28.10.2010 Gazette 2010/43)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **20.04.2009 JP 2009101702**

(71) Applicant: **Oki Denki Bohsai Co., Ltd.**
**Tokyo 108-0023 (JP)**

(72) Inventors:
• **HONDA, Masato**
**Tokyo 108-0023 (JP)**
• **KATO, Yukio**
**Tokyo 108-0023 (JP)**
• **UCHIDA, Hidehiko**
**Tokyo 105-8460 (JP)**

(74) Representative: **Appelt, Christian W.**
**Forrester & Boehmert**
**Pettenkoferstrasse 20-22**
**80336 München (DE)**

(54) **FLAME MONITORING DEVICE AND FLAME MONITORING METHOD**

(57)    A flame monitoring device (10) includes: an infrared light detection unit (12a, 12b) configured to detect infrared light in a specific wavelength range in infrared light radiated from flame (1); a Fourier transformation unit (22) configured to obtain variable frequency components of an infrared light signal intensity of the infrared light detected by the infrared light detection unit (12a, 12b); and a determination unit (24) configured to determine a size of the flame based on a position of a frequency component having a spectral intensity exceeding a threshold value in a distribution in frequency of the variable frequency components obtained by the Fourier transformation unit (22).

FIG. 1

EP 2 423 896 A1

**Description**

**Technical Field**

The present invention relates to a flame monitoring device and a flame monitoring method, and particularly, to a flame monitoring device and a flame monitoring method configured to detect flame by observing infrared light in a predetermined wavelength range radiated from the flame.

**Background Art**

A related flame monitoring device determines a fire by detecting an infrared spectrum unique to carbon dioxide gas that is generated when an object burns. An infrared flame detection device of Patent Document 1 observes a time lag (a phase difference) between a variation in infrared light intensity near a wavelength of 4.4 $\mu$m mainly caused by a resonance phenomenon of carbon dioxide gas and a variation in infrared light intensity near a wavelength of 3.0 $\mu$m mainly caused by high-temperature burning residue, and distinguishes flame from a phenomenon other than flame by detecting randomness of the observed time lag.

**Related Art Document**

**Patent Document**

Patent Document 1: Japanese Patent Application Publication No. 2004-4023

**Summary of the Invention**

**Problem to be Solved by the Invention**

However, even if the related flame detection device described above can detect occurrence of the flame, the device cannot obtain addition information useful for initial fire extinguishment such as the scale of the flame or the type of the burning material. Accordingly, a burning state of the flame is usually checked separately either visually or by using a monitoring camera. Hence it takes a while to start initial fire extinguishment in some cases.

The present invention has been made in view of the aforementioned problem of the related art and an object thereof is to provide a flame monitoring device and a flame monitoring method which are capable of detecting flame and properly analyzing a burning state of the flame.

**Means for Solving the Problem**

To achieve the above-described object, a first aspect of the present invention is a flame monitoring device comprising: an infrared light detection unit configured to detect infrared light in a specific wavelength range in infrared light radiated from flame; a Fourier transformation unit configured to obtain variable frequency components of an infrared light signal intensity of the infrared light detected by the infrared light detection unit; and a determination unit configured to determine a size of the flame based on a position of a frequency component having a spectral intensity exceeding a threshold value in a distribution in frequency of the variable frequency components obtained by the Fourier transformation unit.

The intensity variation of the infrared light in the predetermined wavelength range radiated from the flame is also related to flickers of the flame (burning). Small flame has small flickers and a fast intensity variation. Accordingly, a relatively high frequency component appears dominantly when the intensity variation is subjected to a spectral analysis. On the other hand, large flame has large flickers and the intensity variation becomes slow because various flickers are averaged. Accordingly, a relatively low frequency component appears dominantly when the intensity variation is subjected to the spectral analysis. These are the characteristics based on the size of the flame and are not dependent on an intensity of the flame or a distance from the flame to a point of observation.

According to the first aspect, the size of the flame is determined with respect to each variable frequency component of the infrared light signal intensity on the basis of frequency distribution of the frequency components having the spectral intensity exceeding the predetermined threshold value. Hence it is possible to determine the size of the flame properly and to promptly offer information necessary for initial fire extinguishment such as an amount of a chemical agent or an amount of water.

The determination unit may determine that the flame is large when spectral intensities of first frequency components included in the distribution in frequency are relatively more dominant than spectral intensities of second frequency components included in the distribution in frequency and having higher values in frequency than the first frequency components, and that the flame is small when the spectral intensities of the second frequency components are relatively more dominant than the spectral intensities of the first frequency components.

The determination unit may determine a distance from the flame monitoring device to the flame based on a value in frequency of the frequency component having the spectral intensity exceeding the threshold, when determining that the flame is small.

According to this configuration, the larger spectral intensity is observed at the point closer to the origin of fire in the case of the small flame. Hence it is possible to offer useful information concerning the distance to the origin of fire.

The determination unit may determine a closer distance from the flame monitoring device to the flame for a greater value in frequency of the frequency component having the spectral intensity exceeding the threshold, when determining that the flame is small.

The infrared light in the specific wavelength range may be infrared light near a wavelength of 4.4 $\mu$m.

According to the above-described configuration, since the infrared light near the wavelength of 4.4 $\mu$m is the infrared light radiated particularly due to resonance of carbon dioxide gas generated when the object is burning, it is possible to properly analyze the flickers of the flame by observing this type of the infrared light.

The infrared light detection unit may comprise: a first optical filter configured to transmit infrared light near a wavelength of 4.4 $\mu$m in the infrared light radiated from the flame, and a first infrared light detection element configured to receive the infrared light transmitted through the first optical filter and to output a signal corresponding to an infrared light intensity of the infrared light near the wavelength of 4.4 $\mu$m; and a second optical filter configured to transmit infrared light near a wavelength of 3.1 $\mu$m in the infrared light radiated from the flame, and a second infrared light detection element configured to receive the infrared light transmitted through the second optical filter and to output a signal corresponding to an infrared light intensity of the infrared light near the wavelength of 3.1 $\mu$m.

To achieve the above-described object, a second aspect of the present invention is a flame monitoring device comprising: an infrared light detection unit configured to detect infrared light in at least two different wavelength ranges among infrared light radiated from flame; a Fourier transformation unit configured to obtain a complex variable frequency component of each infrared light signal intensity of the infrared light detected by the infrared light detection unit; a cross spectrum calculating unit configured to obtain a cross spectrum between identical variable frequency components for the complex variable frequency components of each of the wavelength ranges obtained by the Fourier transformation unit; and a determination unit configured to determine a burning material based on a phase difference component of the cross spectrum obtained by the cross spectrum calculating unit.

The inventors of the present invention have found out that a substantially constant phase difference is apt to occur between complex variable frequency components of the respective infrared light signal intensities in different predetermined wavelength ranges irrespective of the variable frequency when a specific material is burned. According to the second aspect, it is possible to specify the burning material by analyzing this phase difference and to promptly offer the information on a fire extinguishing agent (such as the type or amount of the fire extinguishing agent) effective for extinguishing the flame.

The infrared light in the at least two different wavelength ranges may be infrared light near a wavelength of 4.4 $\mu$m and infrared light near a wavelength of 3.1 $\mu$m.

The inventors of the present invention have found out that a phase difference which is constant depending on the burning material occurs in a cross spectrum obtained by observing the infrared light in these two wavelength ranges. According to this configuration, it is possible to specify the burning material by analyzing this phase difference and to promptly offer the information on the fire extinguishing agent effective for extinguishing the fire.

To achieve the above-described object, a third aspect of the present invention is a method for monitoring flame, the method comprising: detecting infrared light in a specific wavelength range in infrared light radiated from flame; obtaining variable frequency components of an infrared light signal intensity of the infrared light as detected; and determining a size of the flame based on a position of a frequency component having a spectral intensity exceeding a threshold value in a distribution in frequency of the variable frequency components as obtained.

According to the third aspect, it is possible to achieve an effect similar to that of the first aspect.


**Effect of the Invention**


According to the present invention, it is possible to detect flame and to analyze a burning state of the flame properly. Hence it is possible to promptly offer information useful for initial fire extinguishment.

**Brief Description of the Drawings**

[Fig. 1] Fig. 1 is a block diagram of a flame monitoring device according to an embodiment of the present invention.
[Fig. 2] Fig. 2 is a block diagram of a flame monitoring processing unit according to the embodiment of the present invention.
[Fig. 3] Fig. 3 is a graph of infrared light intensity distribution based on various heat sources.
[Fig. 4] Fig. 4 is a view for explaining transition of infrared light intensities at the time of occurrence of flame.
[Fig. 5] Fig. 5 is an operation image diagram (1) of a FFT processing unit according to the embodiment of the present invention.
[Fig. 6] Fig. 6 is an operation image diagram (2) of the FFT processing unit according to the embodiment of the present invention.
[Fig. 7] Figs. 7(A) and 7(B) are plot charts of cross spectra when specific materials burn.
[Fig. 8] Fig. 8 is a flowchart of flame monitoring processing according to the embodiment of the present invention.

**Modes for Carrying Out the Invention**

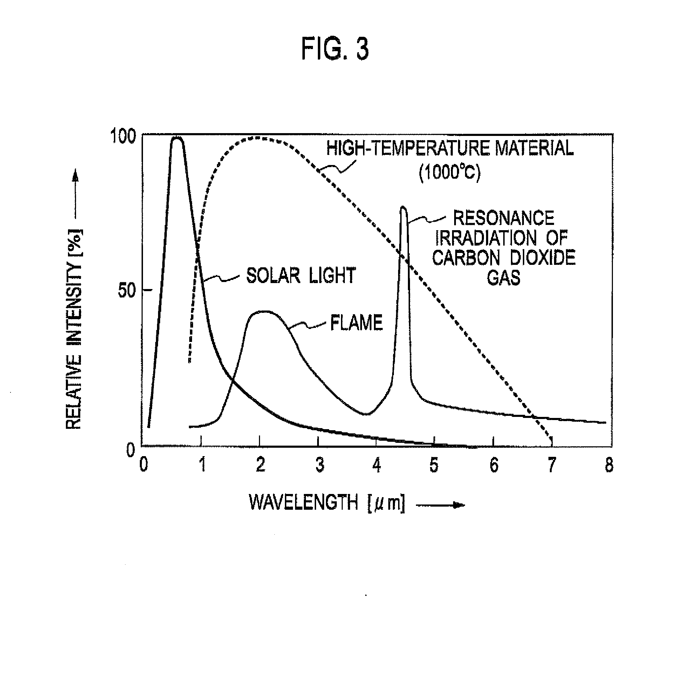

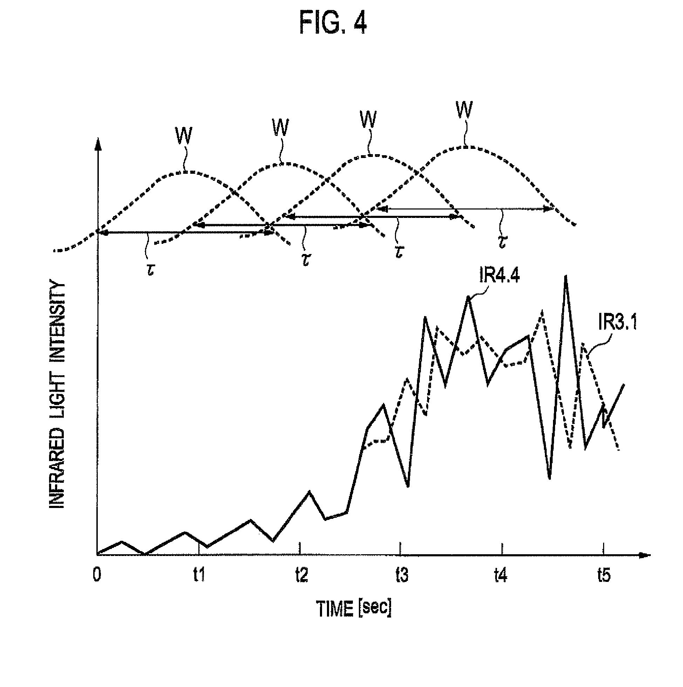

An embodiment of the present of the present invention will be described below in detail with reference to the drawings.
First, infrared light intensity distribution based on various heat sources will be explained with reference to Fig. 3. While there are many spectra of resonance irradiation of carbon dioxide gas ranging from infrared light to ultraviolet light which occur when an object is burning, it is known that there is a large peak at a wavelength of 4.4 $\mu$m in particular. The inventors of the present invention repeated numerous burning experiments by way of selecting another wavelength while defining this infrared light near the wavelength of 4.4 $\mu$m as a reference. As a result, the inventors have decided to use infrared light near a wavelength of 3.1 $\mu$m radiated from high-temperature burning residue in this embodiment as another wavelength range useful for determining a burning state of flame and a burning material.

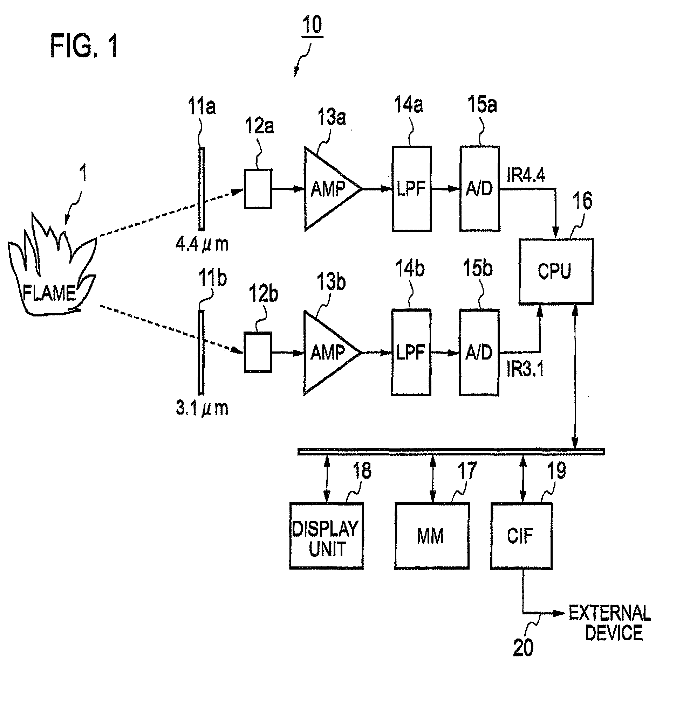

Fig. 1 is a block diagram of a flame monitoring device 10 according to the embodiment of the present invention. Optical filters 11a and 11b transmit the infrared light components near the wavelength of 4.4 $\mu$m and near the wavelength of 3.1 $\mu$m, respectively. Infrared light detection elements 12a and 12b output signals corresponding to infrared light intensities of the infrared light components near the wavelength of 4.4 $\mu$m and near the wavelength of 3.1 $\mu$m, respectively. Amplifier circuits (AMP) 13a and 13b amplify respective detection outputs from the infrared light detection elements 12a and 12b. Low-pass filters (LPF) 14a and 14b limit high frequency components of respective amplified outputs. A/D converters 15a and 15b perform A/D conversion. A CPU 16 performs main control and processing concerning flame monitoring. A main memory (MM) 17 is used by the CPU 16. A display unit 18 displays a result of flame determination and the like. A communication interface (CIF) 19 is connected to an external device (such as an alarm device or a fire extinguisher device) via a communication line 20. The infrared light detection elements 12a and 12b and the like constitute infrared light detection units. The infrared light detection elements 12a and 12b can be formed of thermopile elements or compound optical semiconductor elements configured to generate thermoelectromotive forces corresponding to the infrared light intensities of the respective infrared light components near the wavelength of 4.4 $\mu$m and near the wavelength of 3.1 $\mu$m, for example. The present invention is not limited only to such configurations, however.
By using the above-described configurations, the infrared light near the wavelength of 4.4 $\mu$m in the infrared light radiated from flame 1 is passed through the optical filter 11a and inputted to the infrared light detection element 12a, and is converted into a voltage signal corresponding to the infrared light intensity. Meanwhile, the infrared light near the wavelength of 3.1 $\mu$m is passed through the optical filter 11b and inputted to the infrared light detection element 12b, and is converted into a voltage signal corresponding to the infrared light intensity. High frequency components such as noises in these voltage signals are removed by the LPFs 14a and 14b and the voltage signals are then subjected to A/D conversion by the A/D converters 15a and 15b. Respective infrared light data sets IR4.4 and IR3.1 thus obtained are inputted to the CPU 16.
Transition of infrared light intensities at the time of occurrence of flame will be described with reference to Fig. 4. Heat sources before occurrence of the flame are mainly attributed to reflected light from the sun or heat irradiation from a low-temperature material. Since the heat sources are the same (or not related at a11), intensity variations of the infrared light vary substantially at the same phase (or in an uncorrelated manner) between near the wavelength of 4.4 $\mu$m and near the wavelength of 3.1 $\mu$m. When a fire breaks out, the infrared light near the wavelength of 4.4 $\mu$m attributable to resonance irradiation of carbon dioxide gas reaches the infrared light detection element 12a while the infrared light near the wavelength of 3.1 $\mu$m radiated from the high-temperature burning residue reaches the infrared light detection element 12b. Here, these infrared light components are originated from the same material serving as the heat source but properties of the heat source (burying states) are different. Hence there is a time lag in the intensity variation. Accordingly, the CPU 16 detects the flame based on the infrared light data sets IR4.4 and IR3.1 representing the respective wavelength ranges and analyzes a burning state of the flame, thereby outputting a variety of information useful for initial fire extinguishment to the outside. Now, flame monitoring processing by the CPU 16 will be described below in detail.

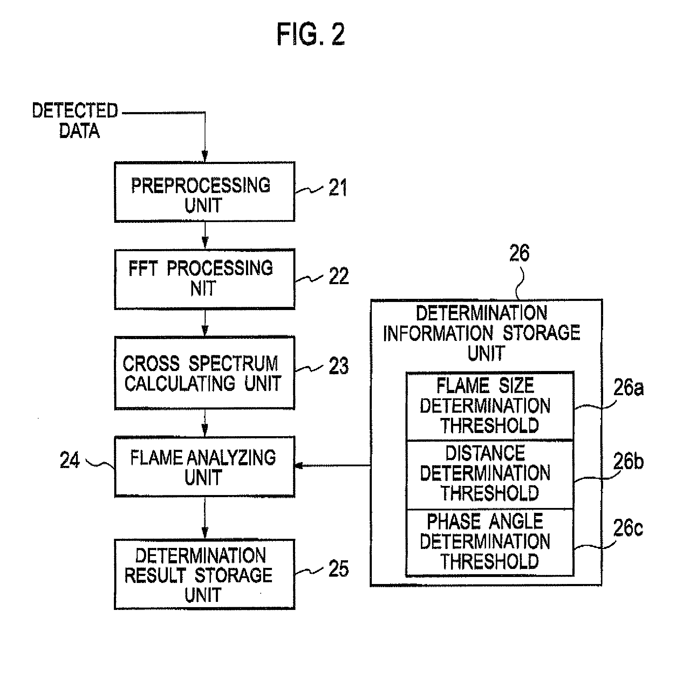

Fig. 2 is a block diagram of a flame monitoring processing unit according to the embodiment of the present invention, which shows various functional blocks to be realized by execution of programs by the CPU 16. A preprocessing unit 21 performs preprocessing of the infrared light data sets IR4.4 and IR3.1 of the respective wavelength ranges. A FFT processing unit (FFT) 22 performs fast Fourier transformation (FFT) on each of the infrared light data sets IR4.4 and IR3.1 after the preprocessing and thereby finds complex frequency components representing the intensity variation. A cross spectrum calculating unit 23 finds a cross spectrum between both of the components (a product of amplitudes and a phase difference between both of the complex frequency components) based on the complex frequency components in the respective infrared light data sets. A flame analyzing unit 24 (a determination unit) analyzes the complex frequency components and the cross spectra thus obtained and analyzes and determines the burning state of the flame (the size of the flame, a distance from a point of observation, the type of the burning material, and the like). A determination result storage unit 25 stores a result of determination by the flame analyzing unit 24. A determination information storage unit 26 stores a variety of determination threshold information in advance, which is used for analyzing and determining the flame.

This determination threshold information stored in the determination information storage unit 26 includes a flame size determination threshold 26a for determining the size of the flame, a distance determination threshold 26b for determining the distance from the flame to the point of observation, and a phase angle determination threshold 26c for determining the type of the burning material based on a phase angle of the cross spectrum.

By the above-described configuration, the preprocessing unit 21 firstly clips the infrared light data sets sequentially for respective predetermined time points τ for each of the infrared light data sets IR4.4 and IR3.1 near the wavelength of 4.4 μm and near the wavelength of 3.1 μm, and performs weighting processing based on a window function W as shown in Fig. 4. The FFT processing unit 22 subjects each of the preprocessed infrared light data sets IRR4.4 and IR3.1 to fast Fourier transformation (FFT), thereby obtaining a complex frequency component X(ω) for each of discrete frequencies (1 Hz to 8 Hz, for example).

This complex frequency component X(ω) is generally expressed by the following formula, in which a real component thereof is defined as XR(ω) and an imaginary component thereof is defined as XI(ω).

[Formula 1]

$$X(\omega) = X_R(\omega) + i\,X_I(\omega)$$

This will be described in concrete terms by applying the respective infrared light data sets near the wavelength of 4.4 μm and near the wavelength of 3.1 μm, Assuming that X41 is the complex frequency component at the discrete frequency of 1 Hz obtained for the infrared light data set IR4.4, that the real component thereof is XR41, and that the imaginary component thereof is XI41, then the size |X41| and a phase θ41 of X41 can be found in accordance with the following formulae.

[Formula 2]

$$\left| X_{41} \right| = \sqrt{X_{R41}^2 + X_{I41}^2}$$

$$\theta_{41} = \tan^{-1}\frac{X_{I41}}{X_{R41}}$$

The components for the discrete frequencies from 2 Hz to 8 Hz can also be obtained in a similar manner.

Meanwhile, assuming that X31 is the complex frequency component at the discrete frequency of 1 Hz obtained for the infrared light data set IR3.1, that the real component thereof is XR31, and that the imaginary component thereof is XI31, then the size |X31| and a phase θ31 of X31 can be found in accordance with the following formulae.

[Formula 3]

$$|X_{31}| = \sqrt{X_{R31}{}^2 + X_{I31}{}^2}$$

$$\theta_{31} = \tan^{-1}\frac{X_{I31}}{X_{R31}}$$

The components for the discrete frequencies from 2 Hz to 8 Hz can also be obtained in a similar manner.

In the meantime, the respective complex frequency components X41 and X31 near the wavelength of 4.4 $\mu$m and near the wavelength of 3.1 $\mu$m can also be expressed as the following formulae by using the sizes and phases of these complex frequency components.

[Formula 4]

$$X_{41} = |X_{41}|\cos\theta_{41} + i|X_{41}|\sin\theta_{41} = |X_{41}|e^{i\theta_{41}}$$

$$X_{31} = |X_{31}|\cos\theta_{31} + i|X_{31}|\sin\theta_{31} = |X_{31}|e^{i\theta_{31}}$$

By the way, the intensity variation of the infrared light in a predetermined wavelength range radiated from the flame is also related to flickers of the flame (burning). Small flame has small flickers and a fast intensity variation. Accordingly, a relatively high frequency component appears dominantly when the intensity variation is subjected to a spectral analysis. On the other hand, large flame has large flickers and the intensity variation becomes slow because various flickers are averaged. Accordingly, a relatively low frequency component appears dominantly when the intensity variation is subjected to the spectral analysis. Numerous experiments have proven that these are the characteristics solely based on the size of the flame and are not dependent on the distance from the flame to the point of observation. Therefore, the size of the flame can be determined by observing frequency distribution of a spectra intensity, exceeding a predetermined threshold TH. This will be described below in concrete terms.

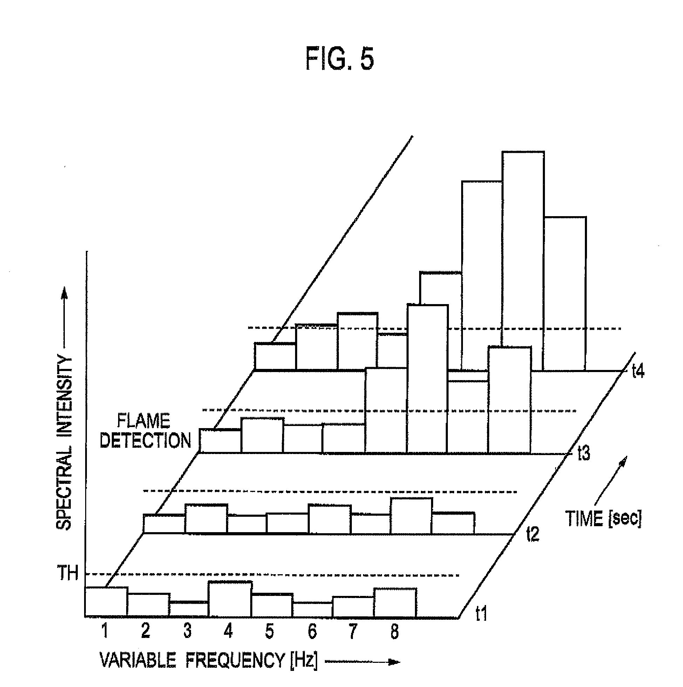

Fig. 5 is an operation image diagram (1) of the FFT processing unit according to the embodiment of the present invention, which shows a case of fire breakout with small flame. The vertical axis indicates spectral intensities, the horizontal axis indicates variable frequencies of the infrared light intensity, and a depth indicates time points. The range from 1 Hz to 8 Hz is applied to an example of the discrete frequency components of the infrared light intensities. A time point t1 is a point before the fire breakout and the spectral intensities of any of the frequency components do not exceed the threshold TH. The same applies to a time point t2. A time point t3 is a point immediately after the fire breakout and the spectral intensities of relatively high frequency components (from 5 Hz to 8 Hz) exceed the threshold TH in this example. Hence it is possible to determine the fire breakout with relatively small flame by detecting this spectral distribution.

In order to avoid erroneous determination affected by noises, it is also possible to obtain a moving average in a direction of the time axis for each of the spectral intensities and then to perform the determination using the threshold TH. Meanwhile, this determination using the threshold does not require all of the high frequency components (from 5 Hz to 8 Hz in the example in Fig. 5) to exceed the threshold TH. For example, the spectral intensity of an intermediate component (7 Hz) may fall below the threshold TH. In short, the determination of the frequency distribution can be made as far as the high frequency components are relatively more dominant than the low frequency components. Then, at a time point t4, the spectral intensities of the high frequency components (from 5 Hz to 8 Hz) are further increased. Hence it is possible to determine that the flame is gaining strength.

Practically, it is rare that the small fire remains small. In other words, the flame usually grows to larger flame over time as mentioned below. If the flame grows larger, the frequency distribution of the spectral intensities moves to a lower frequency side. Hence it is possible to detect the large flame.

Nevertheless, there still may be a case where the flame does not grow larger and the frequency distribution of the spectral intensities remains on the high frequency side. In this case, it is possible to consider that the size of the spectral intensity varies depending on the distance from the point of observation to the flame. To put it the other way round, it is possible to determine the distance from the point of observation to the flame depending on the size of the spectral intensity. Specifically, if the flame is small, then it is possible to determine that the distance to the flame (the origin of fire) is short when the spectral intensity is also high. Meanwhile, it is possible to determine that the distance to the flame (the origin of fire) is long when the spectral intensity is low.

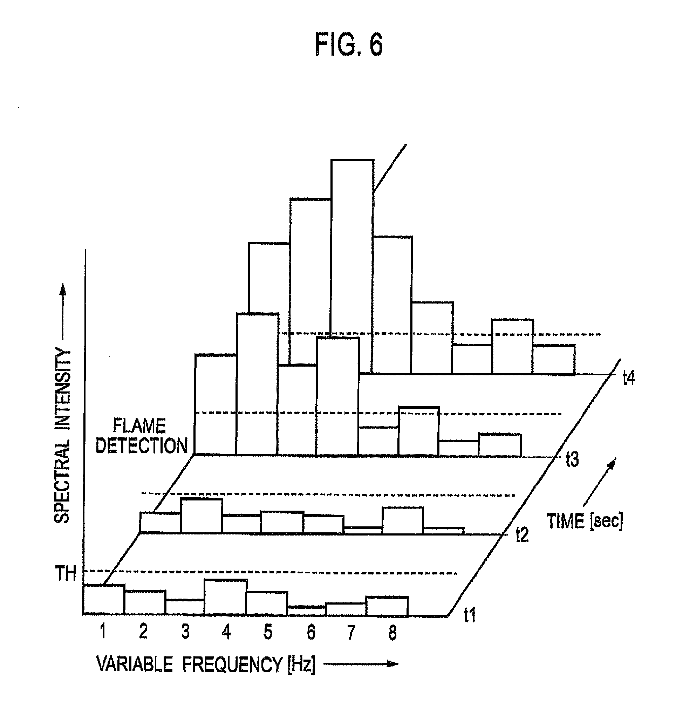

Fig. 6 is an operation image diagram (2) of the FFT processing unit according to the embodiment of the present invention, which shows a case of fire breakout with large flame. A time point t1 is a point before the fire breakout and the spectral intensities of any of the frequency components do not exceed the threshold TH. The same applies to a time point t2. A time point t3 is a point immediately after the fire breakout and the spectral intensities of relatively low frequency components (from 1 Hz to 4 Hz) exceed the threshold TH in this example. Hence it is possible to determine the fire breakout with relatively large flame by detecting this spectral distribution. At a time point t4, the spectral intensities of the low frequency components (from 1 Hz to 5 Hz) are further increased. Hence it is possible to determine that the flame is gaining strength.

In this embodiment, numerous burning tests and observation have been conducted on various sizes of flame in advance and these observation results have been statistically processed and threshold data for dividing the frequency distribution for determining the size of the flame is obtained and stored in a determination threshold storage unit 26a. Meanwhile, for burning with small flame, observation of the flame from various distances has been further conducted and the observation results have been statistically processed and threshold data of the spectral intensities for determining the distance from the flame is obtained and stored in the distance determination threshold 26b for determining the distance to the flame.

Further, the cross spectrum calculating unit 23 finds the cross spectrum between both of the frequency components (the product of amplitudes and the phase difference between both of the complex frequency components) in accordance with the following formula by means of multiplying a complex conjugate X41* of the complex spectrum X41 obtained for the infrared light data IR4.4 by the complex spectrum X31 obtained for the infrared light data IR3.1 with the same frequency components.

[Formula 5]

$$X_{41}^{*} * X_{31} = \left|X_{41}\right|\left|X_{31}\right| e^{i(-\theta_{41}+\theta_{31})}$$

The cross spectrum calculating unit 23 executes calculation of the cross spectra for all of the discrete frequency components (from 1 Hz to 8 Hz, for example) in a similar manner to the above and plots these cross spectra on a graph.

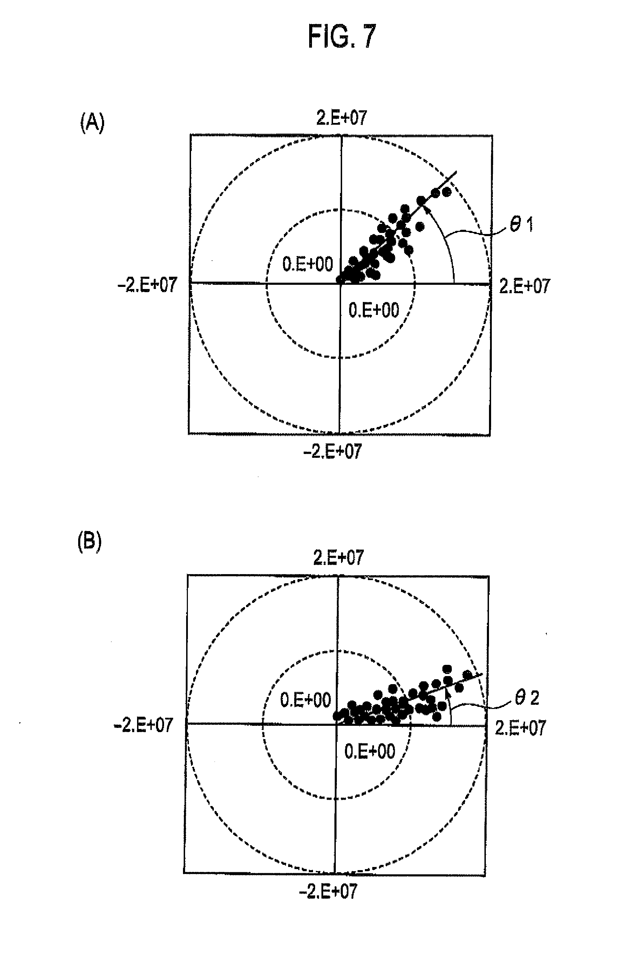

Figs. 7 (A) and 7 (B) are plot charts of the cross spectra when specific materials burn. Fig. 7(A) shows the cross spectrum when normal heptane burns. The angle shows the phase angle of the cross spectrum and a radial direction corresponds to logarithmic scale display of an absolute value of the cross spectrum. In general, in the case of a simple heat source such as an incandescent light bulb, the intensity variations of the respective infrared light components at the wavelength of 4.4 μm and at the wavelength of 3.1 μm are almost synchronized with each other. Accordingly, the phase of the cross spectrum becomes substantially close to 0° regardless of the variable frequency.

In this embodiment, normal heptane is burned as the specific material, for example, and the cross spectra are obtained. A result is shown in Fig. 7(A). In Fig. 7(A), the cross spectra (X41*×X31) to (X48*×X38) of the respective discrete frequency components are plotted on a phase plane. In addition, the cross spectra corresponding to multiple sessions obtained by repeating the burning tests are plotted thereon in an overlapped manner. As shown in Fig. 7(A), the phase angle of the cross spectra is almost constant among the respective frequency components. In this embodiment, a phase angle θ1 on the phase plane is found for each of plotted coordinate values of the cross spectra in accordance with a method of finding a regression line based on a simple linear regression analysis, for example, and the phase angle θ1 turns out to be equal to about 45° in the case of normal heptane. Experiments have also confirmed that this fact does not depend on the distance from the origin of fire or on the size of the flame.

Fig. 7(B) shows cross spectra in the case of burning gasoline as another example of the specific material. Concerning gasoline as well, multiple sessions of burning tests are repeated to obtain a phase angle of cross spectra in accordance with a method similar to the above, and a phase angle θ2 turns out to be equal to about 25° in the case of gasoline.

In terms of the size of the cross spectra, the larger spectral intensity is obtained as the flame is stronger in any sessions of the burning tests.

In this embodiment, numerous burning tests and observation have been conducted on various specific materials in advance and observation results (phase angles) of these cross spectra have been statistically processed and phase angle determination threshold data for dividing the phase angle for determining the burning material is obtained and stored in a phase angle determination threshold storage unit 26c. Moreover, when monitoring the flame, it is possible to specify the burning material by determining the phase angle of the cross spectra obtained as a result of observation of the flame by using the threshold data.

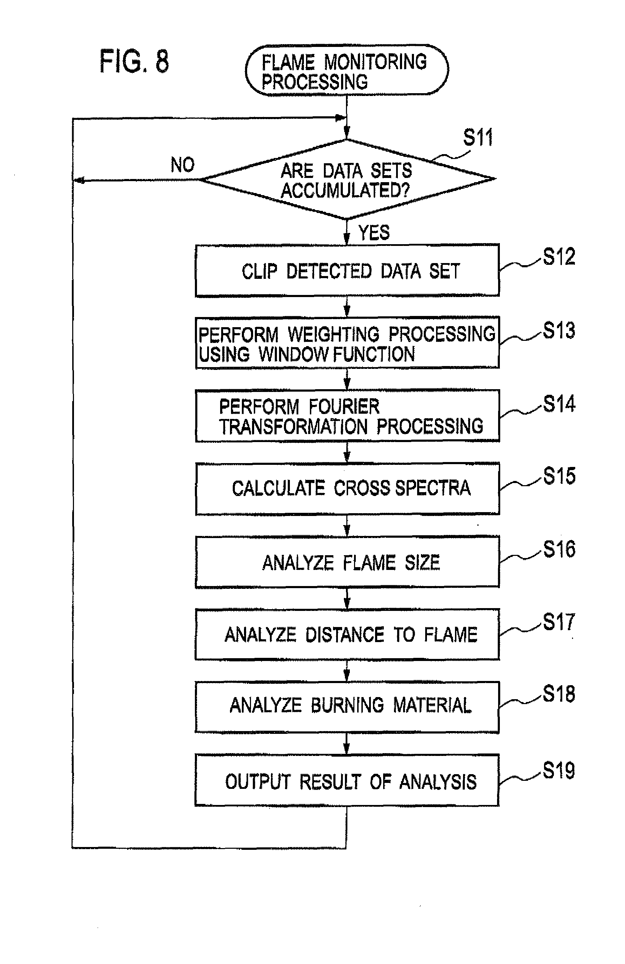

Fig. 8 is a flowchart of flame monitoring processing according to the embodiment of the present invention. In step S11, the infrared light data sets in the number necessary for the FFT processing for both of the wavelength ranges near the wavelength of 4.4 $\mu$m and near the wavelength of 3.1 $\mu$m are accumulated. Eventually, the process goes to step S12 when the infrared light data sets are accumulated. In step S12, the preprocessing unit 21 clips the infrared light data sets necessary for the FFT processing. In step S13, the infrared light data sets clipped in step S12 are weighted by using the window function W. In step S14, the FFT processing unit 22 subjects the preprocessed infrared light data sets in each of the wavelength ranges to Fourier transformation at the same phase and thereby finds the complex frequency components of the infrared light intensity variations. In step S15, the cross spectrum calculating unit 23 calculates the cross spectra based on the complex frequency components obtained in step S14 and finds the phase difference among the complex frequency components in both of the frequency bands.

In step S16, the flame analyzing unit 24 determines the size of the flame by comparing the frequency distribution of the spectral intensity exceeding the predetermined threshold TH which is obtained by the FFT processing unit 22 with the flame size determination threshold 26a stored in the storage unit 26, and stores information on the result of determination in the determination result storage unit 25. In step S17, when it is determined that the flame is small in the above-described processing in step S16, the distance from the point of observation to the flame is determined by further comparing the size of the spectral intensity exceeding the predetermined threshold TH with the distance determination threshold 26b for the distance to the flame which is stored in the storage unit 26, and stores information on the distance to the flame as a result of determination in the determination result storage unit 25. In this embodiment, the processing in step S17 is not carried out when it is determined that the flame is large in the processing in step S16.

In step S18, the flame analyzing unit 24 determines the corresponding burning material by comparing the phase angle of the cross spectra obtained by the cross spectrum calculating unit 23 with the phase angle determination threshold 26c in the storage unit 26, and stores information on the burning material as a result of determination in the determination result storage unit 25. There may be a case where it is not possible to specify the burning material based on the actual flame. In this case, the process will be continued without specifying the burning material. In step S19, the variety of determination information stored in the determination result storage unit 25 is outputted to the external device and then the process returns to step S11. Occurrence of a fire is monitored in real time by repeating the above-described process.

The external device can detect the flame and grasp the burning state of the flame properly by using the monitoring information acquired in real time from the flame monitoring device 10. Moreover, it is also possible to conduct appropriate initial fire extinguishment automatically by remote controlling an unillustrated fire extinguisher system based on this monitoring information.

Although the embodiment has been described by using concrete numerical values for the discrete frequencies and the spectral intensities, the present invention is not limited only to these values.

Industrial Applicability

It is possible to provide a flame monitoring device and a flame monitoring method which are capable of detecting flame and properly analyzing a burning state of the flame.

**Claims**

1. A flame monitoring device comprising:

   an infrared light detection unit configured to detect infrared light in a specific wavelength range in infrared light radiated from flame;
   a Fourier transformation unit configured to obtain variable frequency components of an infrared light signal intensity of the infrared light detected by the infrared light detection unit; and
   a determination unit configured to determine a size of the flame based on a position of a frequency component having a spectral intensity exceeding a threshold value in a distribution in frequency of the variable frequency components obtained by the Fourier transformation unit.

2. The flame monitoring device according to claim 1, wherein the determination unit determines
   that the flame is large when spectral intensities of first frequency components included in the distribution in frequency are relatively more dominant than spectral intensities of second frequency components included in the distribution in frequency and having higher values in frequency than the first frequency components, and
   that the flame is small when the spectral intensities of the second frequency components are relatively more dominant than the spectral intensities of the first frequency components.

3. The flame monitoring device according to claim 1, wherein the determination unit determines a distance from the flame monitoring device to the flame based on a value in frequency of the frequency component having the spectral intensity exceeding the threshold, when determining that the flame is small.

4. The flame monitoring device according to claim 3, wherein the determination unit determines a closer distance from the flame monitoring device to the flame for a greater value in frequency of the frequency component having the spectral intensity exceeding the threshold, when determining that the flame is small.

5. The flame monitoring device according to any one of claims 1 to 4, wherein the infrared light in the specific wavelength range is infrared light near a wavelength of 4.4 $\mu$m.

6. The flame monitoring device according to any one of claims 1 to 4, wherein the infrared light detection unit comprises:

a first optical filter configured to transmit infrared light near a wavelength of 4.4 $\mu$m in the infrared light radiated from the flame, and a first infrared light detection element configured to receive the infrared light transmitted through the first optical filter and to output a signal corresponding to an infrared light intensity of the infrared light near the wavelength of 4.4 $\mu$m; and

a second optical filter configured to transmit infrared light near a wavelength of 3.1 $\mu$m in the infrared light radiated from the flame, and a second infrared light detection element configured to receive the infrared light transmitted through the second optical filter and to output a signal corresponding to an infrared light intensity of the infrared light near the wavelength of 3.1 $\mu$m.

7. A flame monitoring device comprising:

an infrared light detection unit configured to detect infrared light in at least two different wavelength ranges among infrared light radiated from flame;

a Fourier transformation unit configured to obtain a complex variable frequency component of each infrared light signal intensity of the infrared light detected by the infrared light detection unit;

a cross spectrum calculating unit configured to obtain a cross spectrum between identical variable frequency components for the complex variable frequency components of each of the wavelength ranges obtained by the Fourier transformation unit; and

a determination unit configured to determine a burning material based on a phase difference component of the cross spectrum obtained by the cross spectrum calculating unit.

8. The flame monitoring device according to claim 7, wherein the infrared light in the at least two different wavelength ranges are infrared light near a wavelength of 4.4 $\mu$m and infrared light near a wavelength of 3.1 $\mu$m.

9. A method for monitoring flame, the method comprising:

detecting infrared light in a specific wavelength range in infrared light radiated from flame;

obtaining variable frequency components of an infrared light signal intensity of the infrared light as detected; and

determining a size of the flame based on a position of a frequency component having a spectral intensity exceeding a threshold value in a distribution in frequency of the variable frequency components as obtained.

FIG. 1

# FIG. 2

DETECTED ——
DATA

↓

┌─────────────────────┐
│  PREPROCESSING      │ ～ 21
│  UNIT               │
└─────────────────────┘

↓

┌─────────────────────┐
│  FFT PROCESSING     │ ～ 22
│  NIT                │
└─────────────────────┘

↓

┌─────────────────────┐
│  CROSS SPECTRUM     │ ～ 23
│  CALCULATING UNIT   │
└─────────────────────┘

↓

24 ～ ┌─────────────────────┐
      │  FLAME ANALYZING    │ ◄──────────
      │  UNIT               │
      └─────────────────────┘

↓

┌─────────────────────┐
│  DETERMINATION      │ ～ 25
│  RESULT STORAGE     │
│  UNIT               │
└─────────────────────┘

26

┌────────────────────────────────┐
│  DETERMINATION                 │
│  INFORMATION  STORAGE          │
│  UNIT                          │
│  ┌──────────────────────────┐  │
│  │  FLAME SIZE              │  │ 26a
│  │  DETERMINATION          │  │
│  │  THRESHOLD              │  │
│  ├──────────────────────────┤  │
│  │  DISTANCE               │  │ 26b
│  │  DETERMINATION          │  │
│  │  THRESHOLD              │  │
│  ├──────────────────────────┤  │
│  │  PHASE ANGLE            │  │ 26c
│  │  DETERMINATION          │  │
│  │  THRESHOLD              │  │
│  └──────────────────────────┘  │
└────────────────────────────────┘

# FIG. 3

# FIG. 4

EP 2 423 896 A1

# FIG. 5

SPECTRAL INTENSITY →

FLAME DETECTION

TH

VARIABLE FREQUENCY [Hz] →

TIME [sec]

1 2 3 4 5 6 7 8

t1 t2 t3 t4

14

# FIG. 6

# FIG. 7

(A)

(B)

FIG. 8

FLAME MONITORING
PROCESSING

ARE DATA SETS
ACCUMULATED? — S11

NO

YES

CLIP DETECTED DATA SET — S12

PERFORM WEIGHTING PROCESSING
USING WINDOW FUNCTION — S13

PERFORM FOURIER
TRANSFORMATION PROCESSING — S14

CALCULATE CROSS SPECTRA — S15

ANALYZE FLAME SIZE — S16

ANALYZE DISTANCE TO FLAME — S17

ANALYZE BURNING MATERIAL — S18

OUTPUT RESULT OF ANALYSIS — S19

**EP 2 423 896 A1**

<table>
<tr><td colspan="2">INTERNATIONAL SEARCH REPORT</td><td>International application No.<br>PCT/JP2010/056904</td></tr>
</table>

A. CLASSIFICATION OF SUBJECT MATTER
*G08B17/12*(2006.01)i, *G01J1/42*(2006.01)i

According to International Patent Classification (IPC) or to both national classification and IPC

B. FIELDS SEARCHED

Minimum documentation searched (classification system followed by classification symbols)
G08B17/12, G01J1/42

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2004-4023 A (Oki Electric Industry Co., Ltd.), 08 January 2004 (08.01.2004), paragraphs [0023] to [0044]; fig. 5, 7 (Family: none) | 1-9 |
| Y | JP 6-282775 A (Nohmi Bosai Ltd.), 07 October 1994 (07.10.1994), paragraphs [0006] to [0019] (Family: none) | 1-9 |
| A | JP 2002-162293 A (Hochiki Corp.), 07 June 2002 (07.06.2002), paragraphs [0001] to [0012] (Family: none) | 1-9 |

☐ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>07 June, 2010 (07.06.10) | Date of mailing of the international search report<br>22 June, 2010 (22.06.10) |
|---|---|
| Name and mailing address of the ISA/<br>Japanese Patent Office | Authorized officer |
| Facsimile No. | Telephone No. |

Form PCT/ISA/210 (second sheet) (July 2009)

**EP 2 423 896 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004004023 A